# EUROPEAN PATENT SPECIFICATION

(11) **EP 2 821 808 B1**
(45) Date of publication and mention of the grant of the patent: **22.11.2017**
(21) Application number: 13755485.3
(22) Date of filing: 27.02.2013
(51) Int. Cl.: G01S 7/02, G01S 13/28, G01S 13/22, G01S 7/292, G01S 13/76

(54) **RADAR APPARATUS AND RADAR SIGNAL PROCESSING METHOD**
RADARVORRICHTUNG UND SIGNALVERARBEITUNGSVERFAHREN
APPAREIL RADAR ET PROCÉDÉ DE TRAITEMENT DE SIGNAL RADAR

(30) Priority: 02.03.2012 JP 2012046228
(43) Date of publication of application: 07.01.2015
(73) Proprietor: Tokyo Keiki Inc., Tokyo 144-8551 (JP)
(72) Inventor: MIMURA, Toru, Tokyo 144-8551 (JP); NANMOKU, Shinichi, Tokyo 144-8551 (JP)
(74) Representative: Gill Jennings & Every LLP
(86) International application number: PCT/JP2013/055088
(87) International publication number: WO 2013/129459

(56) References cited:
- CA-A1- 2 652 142
- JP-A- H 085 732
- JP-A- H01 237 482
- JP-A- H05 107 350
- JP-A- 2000 329 847
- JP-A- 2011 013 183
- US-A- 4 136 341
- US-A1- 2008 260 019

## Description

### TECHNICAL FIELD

The present invention relates to a radar apparatus and a radar signal processing method using a pulse compression technique, in which any automatic response signals transmitted from automatic transponders, such as a search and rescue radar transponder (SART) and a radar beacon (RACON), and received by the radar apparatus are prevented from creating false radar images on the indicator screen of the radar apparatus.

### BACKGROUND OF THE INVENTION

It is known to use a pulse compression technique in a radar apparatus, in order to enhance the ability of far-range radar search without increasing transmission power, which is desirable under the situations where the hardware requirements are so tight. In a typical pulse compression method, a linearly frequency modulated pulse (or a linear chirp) is transmitted, an echo of the chirp reflected from an echo source such as a target is received, and the cross-correlation between the reference signal (having the same waveform as the transmitted signal) and the received signal is calculated to obtain a compressed pulse.

A radar receive signal may contain not only an echo of the radar transmit signal reflected from an echo source such as a target, but also an automatic response signal transmitted from an automatic transponder in response to the radar transmit signal. Such automatic transponders include SARTs and RACONs. Some radar systems implemented for certain purposes are required by regulation to have ability of indicating the images of automatic response signals from automatic transponders.

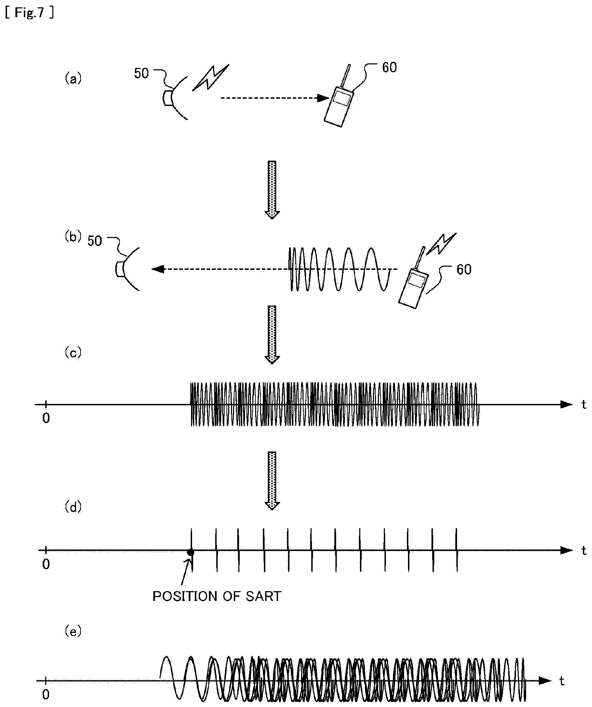

A SART is used to assist in finding and locating a survival craft (such as a lifeboat and a liferaft). When a radar transmit signal having a specified frequency is received, a SART reacts to it by automatically transmitting a response signal. Figs. 7 (a) to 7 (e) are illustrations for illustrating exchange of signals between a typical radar apparatus 50 and a typical SART 60. The radar apparatus 50 transmits a radar transmit signal, which is received by the SART 60, as shown in Fig. 7 (a). Then, the SART 60 reacts to it by repetitively transmitting a frequency modulated pulse, which is received by the radar apparatus 50, as shown in Figs. 7 (b) and 7 (c). In the radar apparatus 50, a band-pass filtering is applied to the received signal so as to pass only the frequency components of the received signal that fall within the frequency band of the receiver of the radar apparatus 50, as shown in Fig. 7 (d). As the result thereof, a line of bright dots are displayed on the radar indicator screen, the innermost one of which indicates the position of the SART 60.

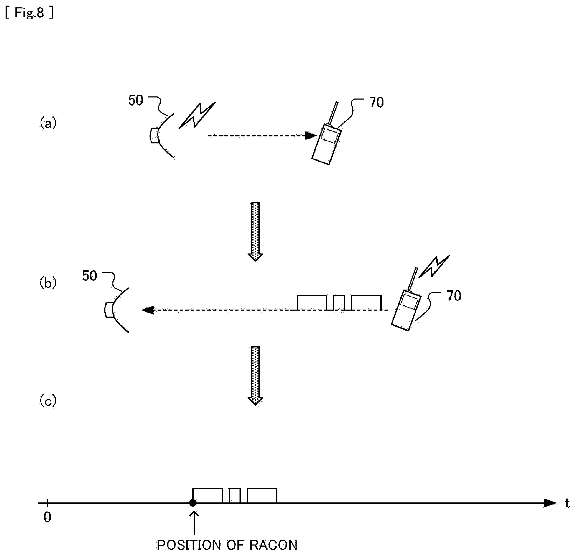

A RACON 70 is used as an equipment of a radio beacon station. As with the SART, the radar apparatus 50 transmits a radar transmit signal, which is received by the RACON 70, as shown in Fig. 8 (a). Then, the RACON 70 reacts to it by transmitting a coded pulse signal, which is received by the radar apparatus 50, as shown in Fig. 8 (b). In the radar apparatus 50, a band-pass filtering is applied to the received signal so as to pass only the frequency components of the received signal that fall within the frequency band of the receiver of the radar apparatus 50, as shown in Fig. 8 (c). As the result thereof, a line of bright dots are displayed on the radar indicator screen, the innermost one of which indicates the position of the RACON 70.

There are used several different types of RACONs. A RACON of the Frequency-Agile type transmits a response pulse having the same carrier frequency as the radar transmit pulse received by the RACON. A RACON of the Slow-Sweep type transmits a response signal having a carrier frequency changing within a carrier frequency band which is predetermined based on response settings stored in the RACON.

Conventional pulse compression radar apparatuses, however, may often encounter a problem when an automatic response signal such as mentioned above is received. In particular, because of the characteristics of the automatic response signals described above, the pulse(s) composing an automatic response signal may not be compressed but rather expanded in the range direction when undergoing the pulse compression process, resulting in that false images of the automatic response signal may be created on the indicator screen of the radar apparatus, which prevents proper indication of the automatic response signal on the indicator screen.

There have been proposed various methods for eliminating undesirable interference from the radar receive signal (such as the method described in United States Patent No. 4,973,968). Nevertheless, the pulses expanded in the range direction as described above may not be sufficiently eliminated with any of conventional interference elimination techniques.

### PRIOR ART DOCUMENTS

US 4,973,968, US 4,136,341 and CA 2,652,142 disclose radar transmission and responder systems.

### SUMMARY OF THE INVENTION

### Problems to be solved by the invention

The present invention has been achieved in view of the problem mentioned above. Accordingly, it is an object of the present invention to provide a radar apparatus and a radar signal processing method using a pulse compression technique, in which the automatic response signal of an automatic transponder is prevented from creating false images on the indicator screen of the radar apparatus.

### Resolution

According to the present invention, the above object is achieved by a radar apparatus using a pulse compression technique in which a pulse compression process is applied to a receive signal to obtain a compressed pulse signal, the radar apparatus comprising:
an antenna adapted to transmit a modulated pulse and to receive an echo from an echo source as well as an automatic response signal from an automatic transponder when the automatic transponder receives a radar transmit signal, the automatic transponder having a dead time after said response;
the antenna being further adapted to repeat a transmit/receive cycle at a second time interval while rotating, in which i) a non-modulated pulse or a trigger pulse is transmitted, ii) at least one modulated pulse is transmitted a first time interval after the transmission of the non-modulated pulse or the trigger pulse, and iii) an echo and/or an automatic response signal occurring after the pulse transmission is received;
a receiver for receiving a receive signal for each transmit/receive cycle;
a signal separator for separating, from the receive signal for each transmit/receive cycle, a first separated receive signal having a frequency band corresponding to that of the modulated pulse;
an interference eliminator for applying an interference elimination process to the first separated receive signal, in which respective first separated receive signals for two consecutive transmit/receive cycles are compared and any signal component having discontinuity between two consecutive transmit/receive cycles is eliminated from the first separated receive signal;
a pulse compressor for applying a pulse compression process to the first separated receive signal having undergone the interference elimination process; and
the length of the first time interval being so selected as to be different between two consecutive transmit/receive cycles and to be shorter than the dead time of the automatic transponder.

In the above radar apparatus, the signal separator may be adapted to separate the first separated receive signal and a second separated receive signal, the second separated receive signal having a frequency band corresponding to that of the non-modulated pulse or the trigger pulse; and the radar apparatus may further comprise a signal combiner for combining the first separated receive signal having undergone the pulse compression process with the second separated receive signal.

Also, in the above radar apparatus, the antenna may be adapted to repeat the transmit/receive cycle in which a short pulse having a pulse width shorter than a modulated pulse is transmitted in advance of the transmissions of the trigger pulse and the modulated pulse; the signal separator may be adapted to separate the first separated receive signal and a second separated receive signal, the second separated receive signal having a frequency band corresponding to that of the short pulse; and the radar apparatus may further comprise a signal combiner for combining the first separated receive signal having undergone the pulse compression process with the second separated receive signal.

Further, according to the present invention, there is provided a radar signal processing method comprising the steps of:
repeating a transmit/receive cycle at a second time interval, in which i) a non-modulated pulse or a trigger pulse is transmitted, ii) at least one modulated pulse is transmitted a first time interval after the transmission of the non-modulated pulse or the trigger pulse, and iii) an echo and/or an automatic response signal occurring after the pulse transmission is received the automatic response signal being transmitted by an automatic transponder following receive of a radar transmit signal, the automatic transponder having a dead time after transmission of said response;
separating, from the receive signal for each transmit/receive cycle, a first separated receive signal having a frequency band corresponding to that of the modulated pulse;
applying an interference elimination process to the first separated receive signal, in which respective first separated receive signals for two consecutive transmit/receive cycles are compared and any signal component having discontinuity between two consecutive transmit/receive cycles is eliminated from the first separated receive signal; and
applying a pulse compression process to the first separated receive signal having undergone the interference elimination process;
wherein: the length of the first time interval is so selected as to be different between two consecutive transmit/receive cycles and to be shorter than the dead time of the automatic transponder.

In this radar signal processing method, the separating step may comprise separating the first separated receive signal and a second separated receive signal, the second separated receive signal having a frequency band corresponding to that of the non-modulated pulse or the trigger pulse; and the method may further comprise the step of combining the first separated receive signal having undergone the pulse compression process with the second separated receive signal.

### Advantages provided by the invention

With the present invention, the modulated pulse is transmitted from the antenna the first time interval after the transmission of the non-modulated pulse or the trigger pulse, and the length of the first time interval is so selected as to be shorter than the dead time of automatic transponders, so that automatic transponders can respond to either the non-modulated pulse or the trigger pulse but not to the modulated pulse. Further, the length of the first time interval is so selected as to be different between two consecutive transmit/receive cycles, and a first separated receive signal having a frequency band corresponding to that of the modulated pulse is separated from the receive signal, and respective first separated receive signals for two consecutive transmit/receive cycles are compared to each other and any signal components having discontinuity between two consecutive transmit/receive cycles are eliminated from the first separated receive signal, so that the signal component originating from the automatic response signal of an automatic transponder can be eliminated from the first separated receive signal. By applying the pulse compression process to the first separated receive signal having undergone the elimination process, the automatic response signal of an automatic transponder is prevented from creating false images on the indicator screen of the radar apparatus.

### BRIEF DESCRIPTION OF THE DRAWINGS

Fig. 1 is a block diagram of a radar apparatus in accordance with the present invention.

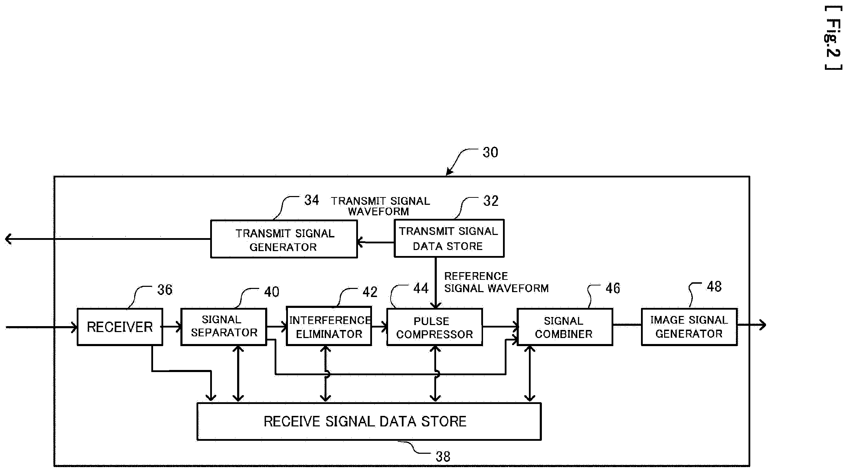

Fig. 2 is a block diagram of a signal processing module of Fig. 1.
Figs. 3 (a) to 3 (f) are signal waveform diagrams for illustrating various signal processing steps carried out by the signal processing module.
Fig. 4 is a signal waveform diagram showing an example of a modulated pulse.
Fig. 5 shows illustrations for illustrating an interference elimination process.
Figs. 6 (a) to 6 (f) are signal waveform diagrams for illustrating various signal processing steps carried out a signal processing module in accordance with another embodiment of the present invention.
Figs. 7 (a) to 7 (e) are illustrations for illustrating exchange of signals between a typical radar apparatus and a typical SART.
Figs. 8 (a) to 8 (c) are illustrations for illustrating exchange of signals between a typical radar apparatus and a typical RACON.

### EXEMPLARY MODE FOR CARRYING OUT THE INVENTION

Hereinafter, embodiments of the present invention will be described with reference to the accompanied drawings.

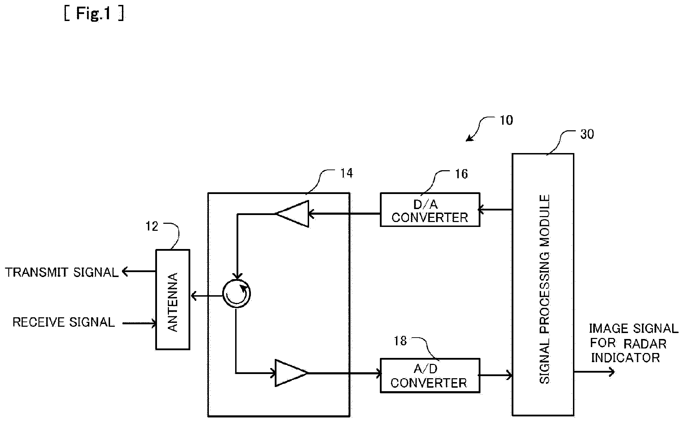

Fig. 1 shows a radar apparatus 10 using a pulse compression technique, as constructed and arranged in accordance with the present invention. Generally, the radar apparatus 10 includes an antenna 12, a transmitting/receiving module 14, digital to analog (D/A) converter 16, analog to digital (A/D) converter 18, and a signal processing module 30. The antenna 12 transmits and receives various electromagnetic waves while rotating. The transmitting/receiving module 14 includes semiconductor amplifiers for amplifying transmit and receive signals and a circulator for routing a transmit signal to the antenna and a receive signal from the antenna.

The D/A converter 16 receives a digital form transmit signal from the signal processing module 30, coverts the digital form transmit signal into an analog form transmit signal, and outputs the analog form transmit signal to the transmitting/receiving module 14. The A/D converter 18 receives an analog form receive signal from the transmitting/receiving module 14, converts the analog form receive signal into a digital form receive signal, and outputs the digital form receive signal to the signal processing module 30.

The signal processing module 30 is configured to apply various processes to the digital signals by software. Generally, the functional components of the signal processing module 30 provided by software are: a transmit signal data store 32 for storing data relating to waveforms for a modulated pulse in the transmit signal; a transmit signal generator 34 for generating the transmit signal which contains a non-modulated pulse and the modulated pulse; a receiver 36 for receiving the receive signal; a receive signal data store 38 for storing the receive signal, as well as any associated processed receive signals, for each transmit/receive cycle; a signal separator 40 for separating a first separated receive signal and a second separated receive signal; an interference eliminator 42 for applying an interference elimination process to the first separated signal so as to eliminate any interfering signal components from the first separated receive signal; a pulse compressor 44 for applying a pulse compression process to the first separated receive signal having undergone the interference elimination process; a signal combiner 46 for combining the first separated receive signal having undergone the pulse compression process with the second separated receive signal; and an image signal generator 48 for processing the combined receive signal so as to generate an image signal and send it to the indicator of the radar apparatus.

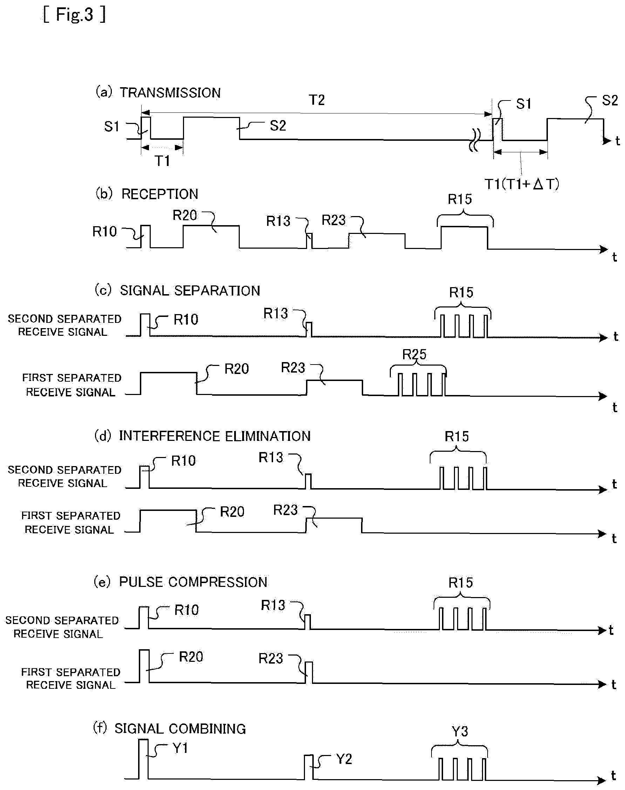

Referring now to Figs. 3 (a) to 3 (f), the signal processing steps carried out by the respective functional components mentioned above will be described in more detail below.

The transmit signal generator 34 repetitively generates a transmit signal at a transmission repetition interval of the antenna, i.e., at a fixed time interval (referred to as the "second time interval T2" hereinafter). The transmit signal contains a set of two different transmit pulses: a short, non-modulated pulse S1 having a relatively narrow pulse width; and a modulated pulse S2 having a wider pulse width than the non-modulated pulse S1. The modulated pulse S2 may be a frequency modulated pulse, such as a linear chirp pulse with its instantaneous frequency varying as a linear function of time and a non-linear chirp pulse with its instantaneous frequency varying as a non-linear function of time. Alternatively the modulated pulse S2 may be a phase code modulated pulse which is modulated with a code train. The transmit signal generator 34 may uses the data stored in the transmit signal data store 32 if necessary, which data contains information relating to the waveform, frequency, and code train for the modulated pulse S2 in the transmit signal.

The non-modulated pulse S1 and the modulated pulse S2 are configured not to have their bandwidths overlapping each other. Further, because the short, non-modulated pulse S1 having a relatively narrow pulse width is used for near-range radar search (i.e., radar search within an area near the antenna 12) while the modulated pulse S2 having a wider pulse width is used for far-range radar search (i.e., radar search within an area distant from the antenna 12), the time interval between the starting points of the non-modulated pulse S1 and the modulated pulse S2 (referred to as the "first time interval T1" hereinafter) is selected depending on the round trip propagation time of the pulses between the antenna and a target in the near area. In addition, the length of the first time interval T1 is alternately changed between two different lengths for each transmit/receive cycle, that is, the length of the time interval T1 is so selected as to be different between two consecutive transmit/receive cycles. This is done for an interference elimination process (described later in detail). The difference between the two different lengths is indicated by ΔT in Fig. 3 (a). Further, the length of the first time interval T1 is so selected as to be shorter than the dead time of automatic transponders.

It is noted that the transmit/receive cycle of the radar apparatus is repeated at the transmission repetition interval of the radar antenna (or the time interval T2).

The transmit signal generated by the transmit signal generator 34 is supplied through the signal transmitting/receiving module 14 to the antenna 12, which transmits the transmit signal and receives an associated receive signal, such as the receive signal shown in Fig. 3 (b). The receive signal is further received by the receiver 36 and stored in the receive signal data store 38. Because the transmit signal has a relatively strong power, some fraction of the transmit signal is routed through the transmitting/receiving module 14 into the receiver 36 and sensed by the latter as pulses, such as the pulses R10 and R20 shown in Fig. 3 (b).

Hereinafter described is what influence a target and an automatic transponder residing in the radar range may impose upon the receive signal.

In the case where a near-range target resides, the non-modulated pulse S1 is reflected by the near-range target, so that an echo of the non-modulated pulse S1 is received by the antenna 12 at the point one round trip propagation time after the transmission point of the non-modulated pulse S1. In contrast, an echo of the modulated pulse S2 reflected by the target begins reaching the antenna 12 during the transmission thereof from the antenna 12, since it has so a wide pulse width. Further, during the transmission of the modulated pulse S2, some fraction of the pulse is routed through the transmitting/receiving module 14 into the receiver 30 to make the latter saturated, so that any echo received during the transmission of the modulated pulse S2 is not properly displayed on the indicator screen of the radar apparatus.

In the case where a target resides in an far-range area, both the non-modulated pulse S1 and the modulated pulse S2 are reflected by the far-range target, so that echoes of the pulses S1 and S2 are received by the antenna 12 at the respective points one round trip propagation time after the respective transmission points of the pulses S1 and S2. The echoes appear in the receive signal as pulses, such as the echo pulses R13 and R23 shown in Fig. 3 (b). The echo pulses R13 and R23 basically have the same frequency spectrums as the corresponding transmit pulses S1 and S2, respectively.

Finally, in the case where an automatic transponder resides in the radar range, it responds to the non-modulated pulse S1 but not to the modulated pulse S2 because the automatic transponder is in the dead time at the reception point of the modulated pulse S2, which is received by the automatic transponder the first time interval T1 after the reception of the non-modulated pulse S1. The response signal, thus transmitted in response to the non-modulated pulse S1 and having a frequency specific to the automatic transponder, is received by the radar antenna 12 and appears in the receive signal as a pulse, such as the pulse R15 shown in Fig. 3(b).

The signal separator 40 separates, from the receive signal for each transmit/receive cycle as received by the receiver 36, two different signals, one relating to the non-modulated pulse S1 and the other relating to the modulated pulse S2. More particularly, the signal separator 40 applies a band-pass filtering process to the receive signal so as to separate, from the receive signal for each transmit/receive cycle, a signal having a frequency band corresponding to that of the non-modulated pulse S1 (referred to as the "second separated receive signal" hereinafter) and a signal having a frequency band corresponding to that of the modulated pulse S2 (referred to as the "first separated receive signal" hereinafter), as shown in Fig. 3 (c).

The second separated receive signal may contain the following signal components extractable from the receive signal:
i) Signal component originating from an echo reflected by a near-range target.
ii) Signal component originating from an echo reflected by a far-range target. This component appears in the second separated receive signal as a pulse, such as the pulse R13 shown in Fig. 3 (c).
iii) Signal component originating from the automatic response signal transmitted from an automatic transponder. This component is found if the automatic response signal has a frequency band overlapping with that of the non-modulated pulse S1, and appears in the second separated receive signal as a pulse train, such as the pulse train R15 shown in Fig. 3 (c).

The first separated receive signal may contain the following signal components extractable from the receive signal:
i) Signal component originating from an echo reflected by a far-range target. This component appears in the first separated receive signal as a pulse, such as the pulse R23 shown in Fig. 3 (c).
ii) Signal component originating from the automatic response signal transmitted from an automatic transponder. This component is found if the automatic response signal has a frequency band overlapping with that of the modulated pulse S2, and appears in the first separated receive signal as a pulse train, such as the pulse train R25 shown in Fig. 3 (c).

Where the automatic transponder is a SART, it transmits a SART signal in response to a rader transmit signal. The SART signal is swept across the complete radar frequency band repetitively and quickly, so that its bandwidth overlaps with that of the non-modulated pulse S1, as well as with that of the modulated pulse S2. Thus, the signal components originating from the SART signal appear in both the first and second separated receive signals.

Where the automatic transponder is a RACON of the Frequency-Agile type, it transmits a response pulse having the same frequency as the non-modulated pulse S1, so that the signal component originating from the response signal appears only in the second separated receive signal.

Where the automatic transponder is a RACON of the Slow-Sweep type, it transmits a response signal which is swept across the complete radar frequency band very slowly, so that the signal component originating from the response signal appears in either the first or second separated receive signal, but not both, depending on the point in time of reception of the response signal by the radar within the time frame of the frequency sweep cycle.

Then, the interference eliminator 42 applies an interference elimination process to the first separated receive signal. The interference elimination process is carried out based on the consideration on whether or not the time delay of the signal component in question from the transmission point of the modulated pulse S2 has continuity between two consecutive transmit/receive cycles. More particularly, since the azimuth of the radar beam and the transmission point in time of the transmit signal are little different between two consecutive transmit/receive cycles, it is well assumed that the echo of the modulated pulse S1 reflected by a target is received with substantially the same time delay from the transmission point of the modulated pulse S2 between two consecutive transmit/receive cycles, even when the target is moving. In contrast, the response signal of an automatic transponder transmitted in response to the non-modulated pulse S1 is received with different time delays from the transmission point of the modulated pulse S2 between two consecutive transmit/receive cycles, since the length of the first time interval T1, which is the interval between the transmission points of the non-modulated pulse S1 and the modulated pulse S2, is alternately changed between two different lengths for each transmit/receive cycle, and therefore is different between two consecutive transmit/receive cycles. Thus, the signal component of the first separated receive signal originating from the response signal of an automatic transponder transmitted in response to the non-modulated pulse S1 has discontinuity in time delay from the transmission point of the modulated pulse S2 between two consecutive transmit/receive cycles. Accordingly, by comparing the signal level between two first separated receive signals for two consecutive transmit/receive cycles to obtain the difference between them, the signal component of the first separated receive signal originating from the response signal of an automatic transponder (such as the pulse R25 shown in Fig. 3 (c)) can be determined and eliminated from the first separated receive signal, as shown in Fig. 3 (d).

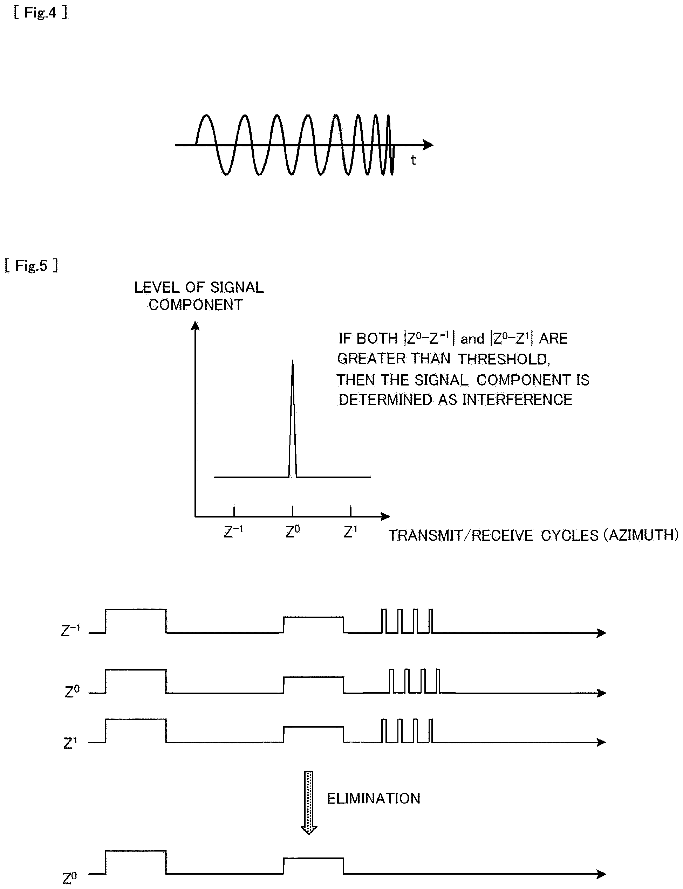

Fig. 5 illustrates an example of the steps for determination of such a signal component of the first separated receive signal. The signal level of a first separated receive signal Z⁰ for a targeted transmit/receive cycle is compared with respective signal levels of respective first separated receive signals Z⁻¹ and Z¹ for the preceding and following transmit/receive cycles over time, with their transmission points of the modulated pulse S2 being aligned with each other. Then, the absolute value of the difference between two compared signals at each point in time, represented as |Z⁰⁻Z⁻¹| and |Z⁰⁻Z¹|, is compared with a threshold. If the first separated receive signal Z0 includes any portions in time where both the two absolute values |Z⁰⁻Z⁻¹| and |Z⁰⁻Z¹| are greater than the threshold, then such portions are nulled, so that the signal component of the first separated receive signal Z⁰ in such portions are eliminated from the signal Z⁰.

With this interference elimination process, the signal component originating from the response signal of an automatic transponder transmitted in response to the non-modulated pulse S1 can be eliminated from the first separated receive signal. There may be other interfering signal components, such as those originating from the radar signal transmitted by other radar apparatus having the same frequency band. Any such interfering signal components can be also eliminated with this interference elimination process.

A similar interference elimination process may be applied also to the second separated receive signal as well. The second separated receive signal may include the signal components originating from an echo of the non-modulated pulse S1 reflected by a target and from the response signal of an automatic transponder transmitted in response to the non-modulated pulse S1. Such signal components do not meet the above determination criteria, so that they are maintained in the second separated receive signal after the interference elimination process.

Then, the pulse compressor 44 applies a pulse compression process to the first separated receive signal having undergone the interference elimination process. The pulse compression process is carried out by cross-correlating the waveform of the first separated receive signal with the reference signal waveform, which is obtained from the transmit signal waveform data, which may be read out from the transmit signal data store 32 when necessary.

The first separated receive signal having undergone the interference elimination process contains the signal component originating from an echo of the modulated pulse S2, so that the first separated receive signal, after having undergone the pulse compression process, assumes a form of a pulse signal having pulses of enhanced levels, such as shown in Fig. 3 (e).

Then, the signal combiner 46 combines the first separated receive signal having undergone the pulse compression process with the second separated receive signal. In this signal combining process: i) the transmission point of the modulated pulse S2 in the first separated receive signal and the transmission point of the non-modulated pulse S1 in the second separated receive signal are aligned with each other within the time frame of the transmit/receive cycle; ii) at least one of these two signals is amplified to make the noise levels of these two signals the same; and iii) the levels of these two signals are compared to each other and the higher one of the two levels is used as the level of the combined receive signal at respective points within the time frame of the transmit/receive cycle. Fig. 3 (e) shows an example of a set of the first and second separated receive signals to be combined, while Fig. 3 (f) shows a corresponding example of the resulting combined signal. In this example, the pulses R20 and R23 in the second separated receive signal have higher levels than the corresponding pulses R10 and R13 in the first separated receive signal, so that the pulses R20 and R23 are inherited by the combined signal as pulses Y1 and Y2 (shown in Fig. 3 (f)). Note that the pulses R13 and R23 (shown in Fig. 3 (e)) are pulses originating from echoes of the transmit pulses S1 and S2 reflected by a far-range target. The second separated receive signal also include a pulse train R15 (shown in Fig. 3 (e)) originated from the response signal from an automatic transponder, which is also inherited by the combined signal as a pulse train Y3 (shown in Fig. 3 (f)).

Then, the image signal generator 48 process the combined signal so as to generate an image signal and send it to the indicator of the radar apparatus.

With the processes described above, the images of both near-range and far-range targets can be displayed on the indicator screen. In addition, the images created by the automatic response signal of an automatic transponder can be properly displayed on the indicator screen, without being affected by the pulse compression process.

With the above embodiment, the described processes are carried out by the functional components of the signal processing module 30, including the receiver 36 to the image signal generator 48, and therefore by software. The present invention is not limited to this, however. In certain alternative embodiments of the present invention, some or all of the processes may be carried out by hardware.

Further, with the above embodiment, a single modulated pulse is transmitted in each transmit/receive cycle. The present invention is not limited to this, however. In certain alternative embodiments of the present invention, two or more modulated pulses may be transmitted in each transmit/receive cycle. In such embodiments, it is advantageous that the time intervals between the transmission point of the non-modulated pulse and the respective transmission points of the modulated pulses are so selected as to be shorter than the dead time of automatic transponders.

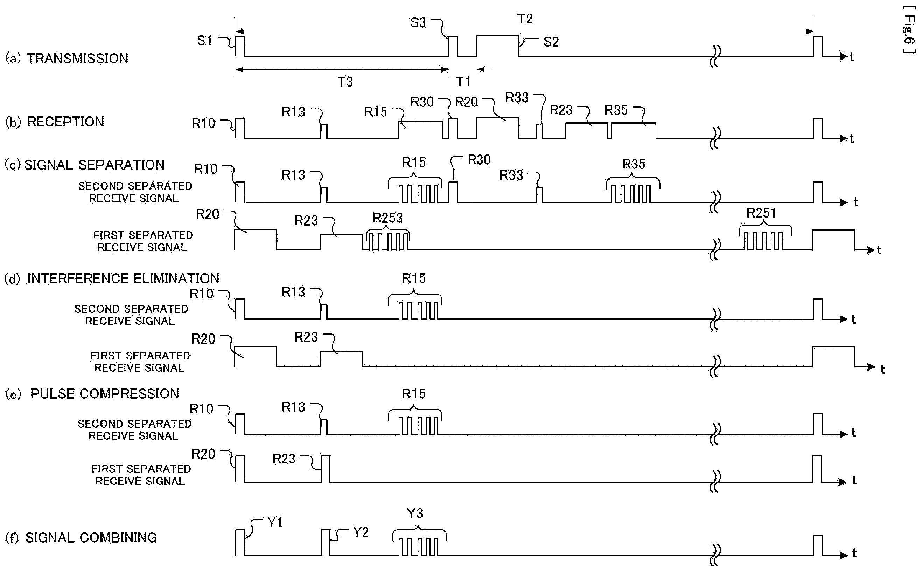

In addition, with the above embodiment, the non-modulated pulse is used for near-range radar search, for which an echo of the modulated pulse cannot be sensed by the receiver of the radar apparatus. The present invention is not limited to this, however. The modulated pulse, or the short pulse, may be used just as a trigger pulse for triggering the responding action of an automatic transponder. Further, in the case where it is not required to display the images of the automatic response signal of an automatic transponder on the indicator screen, the signal combiner can be dispensed with. Figs. 6 (a) to 6 (f) show an embodiment using a trigger pulse.

In this embodiment, as shown in Fig. 6 (a), the transmit signal generator 34 repetitively generates a transmit signal at a transmission repetition interval of the antenna, i.e., at a fixed time interval (referred to as the "second time interval T2" hereinafter). The transmit signal contains a set of three different transmit pulses: a short pulse S1 having a relatively narrow pulse width, a trigger pulse S3 also having a relatively narrow pulse width, and a modulated pulse S2 having a wider pulse width than the short pulse S1 and the trigger pulse S3. The short pulse S1, as well as the trigger pulse S3, may be either a non-modulated pulse or a modulated pulse. Further, the pulses S1 and S3 may have either the same or different frequencies. The short pulse S1 may have a pulse width of, say, 2 microseconds or shorter, and preferably 1.2 microseconds or shorter. The modulated pulse S2 may have a pulse width of, say, 30 microseconds or shorter, and preferably 20 microseconds or shorter.

The time interval between the transmission points of the short pulse S1 and the trigger pulse S3 (referred to as the "third time interval T3" hereinafter) is so selected as to be longer than the dead time of automatic transponders. For example, the third time interval T3 may be preferably selected depending on the range to be displayed on the indicator screen (i.e., the indication range). The time interval between the transmission points of the trigger pulse S3 and the modulated pulse S2 (referred to as the "first time interval T1" hereinafter) is so selected as to be shorter than the dead time of automatic transponders, as with the former embodiment.

In addition, each of the length of the first time interval T1, the length of the second time interval T2 (which is the transmission repetition interval of the radar antenna) and the length of the third time interval T3 is alternately changed between two different lengths for each transmit/receive cycle, that is, the length of each of the time intervals T1, T2 and T3 is so selected as to be different between two consecutive transmit/receive cycles. Also, the length of the sum of the first and third time intervals T1 and T3 is alternately changed between two different lengths for each transmit/receive cycle, and therefore is different between two consecutive transmit/receive cycles.

The transmit signal generated by the transmit signal generator 34 is supplied through the signal transmitting/receiving module 14 to the antenna 12, which transmits the transmit signal and receives an associated receive signal, such as the receive signal shown in Fig. 6 (b). The receive signal is further received by the receiver 36 and stored in the receive signal data store 38. Because the transmit signal has a relatively strong power, some fraction of the transmit signal is routed through the transmitting/receiving module 14 into the receiver 36 and sensed by the latter as pulses, such as the pulses R10, R30 and R20 shown in Fig. 6 (b).

In the case where a target resides within the radar range, the short pulse S1 and the trigger pulse S3 are reflected by the target, so that echoes of the pulses S1 and S3 are received by the antenna 12 at the point one round trip propagation time after the respective transmission points of the pulses S1 and S3. The echoes appear in the receive signal as pulses, such as the echo pulses R13 and R33 shown in Fig. 6 (b). Similarly, the modulated pulse S2 is reflected by the target, so that an echo of the modulated pulse S2 is received by the antenna 12 at the point one round trip propagation time after the transmission point of the modulated pulse S2. The echo appears in the receive signal as a pulse, such as the echo pulse R23 shown in Fig. 6 (b).

In the case where an automatic transponder resides within the radar range, it responds to the short pulse S1 by transmitting a response signal having a frequency specific to the automatic transponder. The response signal is received by the radar antenna 12 and appears in the receive signal as a pulse, such as the pulse R15 shown in Fig. (b). The automatic transponder also responds to the trigger pulse S3 by transmitting another response signal. The response signal is received by the radar antenna 12 and appears in the receive signal as another pulse, such as the pulse R35 shown in Fig. 6 (b). The automatic transponder, however, does not respond to the modulated pulse S2 because the automatic transponder is in the dead time at the reception point of the modulated pulse S2, which is received by the automatic transponder the first time interval T1 after the reception of the trigger pulse S3.

The signal separator 40 separates, from the receive signal for each transmit/receive cycle as received by the receiver 36, two different signals, one relating to the short pulse S1 and the other relating to the modulated pulse S2. More particularly, the signal separator 40 applies a band-pass filtering process to the receive signal so as to separate, from the receive signal for each transmit/receive cycle, a signal having a frequency band corresponding to that of the short pulse S1 (referred to as the "second separated receive signal" hereinafter) and a signal having a frequency band corresponding to that of the modulated pulse S2 (referred to as the "first separated receive signal" hereinafter), as shown in Fig. 6 (c). Further, in the example shown in Figs. 6 (a) to 6 (f), the short pulse S1 and the trigger pulse S3 have the same frequency band, so that such signal components of the receive signal originating from the trigger pulse S3 are contained in the second separated receive signal.

The second separated receive signal may contain the following signal components extractable from the receive signal:
i) Signal component originating from some fraction of the transmit signal routed through the transmitting/receiving module 14 into the receiver 36 and sensed by the latter. This component appears in the second separated receive signal as a pulse, such as the pulses R10 and R30 shown in Fig. 6 (c).
ii) Signal component originating from an echo reflected by a target. This component appears in the second separated receive signal as a pulse, such as the pulses R13 and R33 shown in Fig. 6 (c).
iii) Signal component originating from the automatic response signal of an automatic transponder. This component is found if the automatic response signal has a frequency band overlapping with that of the short pulse S1, and appears in the second separated receive signal as a pulse train, such as the pulse trains R15 and R35 shown in Fig. 6 (c).

The first separated receive signal may contain the following signal components extractable from the receive signal:
i) Signal component originating from some fraction of the transmit signal routed through the transmitting/receiving module 14 into the receiver 36 and sensed by the latter. This component appears in the first separated receive signal as a pulse, such as the pulse R2 shown in Fig. 6 (c).
ii) Signal component originating from an echo of the modulated pulse S2 reflected by a target. This component appears in the first separated receive signal as a pulse, such as the pulse R23 shown in Fig. 6 (c).
iii) Signal component originating from the automatic response signal of an automatic transponder. This component is found if the automatic response signal has a frequency band overlapping with that of the modulated pulse S2, and appears in the first separated receive signal as a pulse train, such as the pulse trains R251 and R253 shown in Fig. 6 (c).

Then, the interference eliminator 42 applies an interference elimination process to the first separated receive signal. The response signal of an automatic transponder transmitted in response to the short pulse S1, as well as that transmitted in response to the trigger pulse S3, is received with different time delays from the transmission point of the modulated pulse S2 between two consecutive transmit/receive cycles, since the length of the sum of the first and third time intervals T1+T3, which is the interval between the transmission points of the short pulse S1 and the modulated pulse S2, as well as the length of the first time interval T1, which is the interval between the transmission points of the trigger pulse S3 and the modulated pulse S2, is alternately changed between two different lengths for each transmit/receive cycle, and therefore is different between two consecutive transmit/receive cycles. Thus, the signal component of the first separated receive signal originating from the response signal of an automatic transponder transmitted in response to the non-modulated pulse S1, as well as that from the response signal of an automatic transponder transmitted in response to the trigger pulse S3, has discontinuity in time delay from the transmission point of the modulated pulse S2 between two consecutive transmit/receive cycles. Accordingly, by comparing the signal level between two first separated receive signals for two consecutive transmit/receive cycles to obtain the difference between them, the signal components of the first separated receive signal originating from the response signals of an automatic transponder (such as the pulses R251 and R253 shown in Fig. 6 (c)) can be determined and eliminated from the first separated receive signal, as shown in Fig. 6 (d).

A similar interference elimination process is applied to the second separated receive signal as well. As mentioned above, the third time interval T3, which is the interval between the transmission points of the short pulse S1 and the trigger pulse S3, is alternately changed between two different lengths for each transmit/receive cycle, and therefore is different between two consecutive transmit/receive cycles. Thus, i) the signal component originating from some fraction of the trigger pulse S3 in the transmit signal routed through the transmitting/receiving module 14 into the receiver 36 and sensed by the latter (such as the pulse R30 shown in Fig. 6 (c)), ii) the signal component originating from an echo of the trigger pulse S3 reflected by an target (such as the pulse R33 shown in Fig. 6 (c), and iii) the signal component originating from the automatic response signal of an automatic transponder transmitted in response to the trigger pulse S3 (such as the pulse train R35 shown in Fig. 6 (c)) each have discontinuity in time delay from the transmission point of the modulated pulse S2 between two consecutive transmit/receive cycles. Accordingly, by comparing the signal level between two second separated receive signals for two consecutive transmit/receive cycles to obtain the difference between them, these signal components of the second separated receive signal can be eliminated from the second separated receive signal, as shown in Fig. 6 (d). In contrast, i) the signal component originating from an echo of the short pulse S1 reflected by an target (such as the pulse R13 shown in Fig. 6 (c)) and ii) the signal component originating from the automatic response signal of an automatic transponder transmitted in response to the short pulse S1 (such as the pulse train R15 shown in Fig. 6 (c)) each have continuity in time delay from the transmission point of the modulated pulse S2 between two consecutive transmit/receive cycles, and therefore maintained in the second separated receive signal even after having undergone the interference elimination process.

In the case where the frequency band of the trigger pulse S3 is selected to be different from that of the short pulse S1, i) the signal component originating from some fraction of the trigger pulse S3 in the transmit signal routed through the transmitting/receiving module 14 into the receiver 36 and sensed by the latter (such as the pulse R30 shown in Fig. 6 (c)), ii) the signal component originating from an echo of the trigger pulse S3 reflected by an target (such as the pulse R33 shown in Fig. 6 (c) can be eliminated from the second separated receive signal through the signal separation process carried out by the signal separator 40, instead of the interference elimination process. Nevertheless, the signal component originating from the automatic response signal of an automatic transponder transmitted in response to the trigger pulse S3 (such as the pulse train R35 shown in Fig. 6 (c)) may not be eliminated through the signal separation process carried out by the signal separator 40, so that it is preferable to eliminate this signal component through the interference elimination process.

Then, the pulse compressor 44 applies a pulse compression process to the first separated receive signal having undergone the interference elimination process. The pulse compression process is carried out by cross-correlating the waveform of the first separated receive signal with the reference signal waveform, which is obtained from the transmit signal waveform data, which may be read out from the transmit signal data store 32 when necessary.

The first separated receive signal having undergone the interference elimination process contains the signal component originating from an echo of the modulated pulse S2, so that the first separated receive signal, after having undergone the pulse compression process, assumes a form of a pulse signal having pulses of enhanced levels, such as shown in Fig. 6 (e).

Then, the signal combiner 46 combines the first separated receive signal having undergone the pulse compression process with the second separated receive signal. In this signal combining process: i) the transmission point of the modulated pulse S2 in the first separated receive signal and the transmission point of the non-modulated pulse S1 in the second separated receive signal are aligned with each other within the time frame of the transmit/receive cycle; and ii) the levels of these two signals are compared to each other and the higher one of the two levels is used as the level of the combined signal at respective points within the time frame of the transmit/receive cycle. With this process, for example, Fig. 6 (e) shows an example of a set of the first and second separated receive signals to be combined, while Fig. 6 (f) shows a corresponding example of the resulting combined signal. In this example, the pulses R20 and R23 in the second separated receive signal have higher levels than the corresponding pulses R10 and R13 in the first separated receive signal, so that the pulses R20 and R23 are inherited by the combined signal as pulses Y1 and Y2 (shown in Fig. 3 (f)). Note that the pulses R13 and R23 (shown in Fig. 6 (e)) are pulses originating from echoes of the transmit pulses S1 and S2 reflected by a far-range target. The second separated receive signal also include a pulse train R15 (shown in Fig. 3 (e)) originated from a response signal transmitted from an automatic transponder, which is also inherited by the combined signal as a pulse train Y3 (shown in Fig. 3 (f)).

With this embodiment, the length of the time interval T3 between the transmission points of the short pulse S1 and the trigger pulse S3 may be selected to be sufficiently long, and can be selected for example depending on the indication range of the indicator screen such that any automatic transponders residing in the indication range may be surely displayed on the indicator screen. In such a case, when the indication range is changed, it is preferable to change the length of the third time interval T3 depending on the new indication range. If the indication range is so short that the length of the third time interval T3 cannot avoid to be shorter than the dead time of an automatic transponder, this embodiment will function equivalently with the former embodiment. Under such a situation, the trigger pulse S3 can be dispensed with, and the purpose of the trigger pulse S3 is achieved by the short pulse S1 instead. In contrast, if the indication range is relatively long, it is preferable to select the length of the third time interval T3 to be sufficiently long. This ensures that i) the response signal of an automatic transponder can be surely received by the radar apparatus without being hidden by the modulated pulse S2, ii) a relatively weak echo reflected from a far-range target can be surely sensed by the radar apparatus by virtue of the use of the pulse compression process, and iii) any undesirable response of an automatic transponder to the modulated pulse S2 is prevented by virtue of the use of the trigger pulse S3.

### LIST OF REFERENCE NUMERALS

- 10: Radar apparatus
- 12: Antenna
- 36: Receiver
- 42: Interference eliminator
- 44: Pulse compressor
- 46: Signal combiner
- T1: First time interval
- T2: Second Time Interval
- T3: Third time interval
- R13, R23, R33: Signal components of the radar receive signal originating from echoes of the radar transmit signal
- R15, R25, R35: Signal components of the radar receive signal originating from an automatic response signal of an automatic transponder

## Claims

1. A radar apparatus (10) using a pulse compression technique in which a pulse compression process is applied to a receive signal to obtain a compressed pulse signal, the radar apparatus comprising:
an antenna (12) adapted to transmit a modulated pulse S2 and to receive an echo from an echo source as well as an automatic response signal from an automatic transponder when the automatic transponder receives a radar transmit signal, the automatic transponder having a dead time after said response;
the antenna, while rotating, being further adapted to repeat with a period equal to a second time interval T2 a transmit/receive cycle, in which i) a non-modulated pulse S1 or a trigger pulse is transmitted, ii) at least one modulated pulse S2 is transmitted a first time interval T1 after the transmission of the non-modulated pulse S1 or the trigger pulse, and iii) an echo and/or an automatic response signal occurring after the pulse transmission is received;
a receiver (36) for receiving a receive signal for each transmit/receive cycle;
a signal separator (40) for separating, from the receive signal, for each transmit/receive cycle, a first separated receive signal having a frequency band corresponding to that of the modulated pulse;
an interference eliminator (42) for applying an interference elimination process to the first separated receive signal, in which respective first separated receive signals for two consecutive transmit/receive cycles are compared and any signal component having discontinuity between two consecutive transmit/receive cycles is eliminated from the first separated receive signal;
a pulse compressor (44) for applying a pulse compression process to the first separated receive signal having undergone the interference elimination process; and
the length of the first time interval T1 being so selected as to be different between two consecutive transmit/receive cycles and to be shorter than the dead time of the automatic transponder.

2. A radar apparatus (10) according to claim 1, wherein:
the signal separator (40) is adapted to separate the first separated receive signal and a second separated receive signal, the second separated receive signal having a frequency band corresponding to that of the non-modulated pulse or the trigger pulse; and
the radar apparatus further comprises a signal combiner (46) for combining the first separated receive signal having undergone the pulse compression process with the second separated receive signal.

3. A radar apparatus (10) according to claim 1, wherein:
the antenna (12) is adapted to repeat the transmit/receive cycle in which a short pulse having a pulse width shorter than a modulated pulse is transmitted in advance of the transmissions of the trigger pulse and the modulated pulse;
the signal separator (40) is adapted to separate the first separated receive signal and a second separated receive signal, the second separated receive signal having a frequency band corresponding to that of the short pulse; and
the radar apparatus further comprises a signal combiner (46) for combining the first separated receive signal having undergone the pulse compression process with the second separated receive signal.

4. A radar signal processing method comprising the steps of:
repeating a transmit/receive cycle with a period equal to a second time interval T2, in which i) a non-modulated pulse S1 or a trigger pulse is transmitted, ii) at least one modulated pulse S2 is transmitted a first time interval T1 after the transmission of the non-modulated pulse S1 or the trigger pulse, and iii) an echo and/or an automatic response signal occurring after the pulse transmission is received;, the automatic response signal being transmitted by an automatic transponder following receive of a radar transmit signal, the automatic transponder having a dead time after transmission of said response;
separating, from the receive signal for each transmit/receive cycle, a first separated receive signal having a frequency band corresponding to that of the modulated pulse;
applying an interference elimination process to the first separated receive signal, in which respective first separated receive signals for two consecutive transmit/receive cycles are compared and any signal component having discontinuity between two consecutive transmit/receive cycles is eliminated from the first separated receive signal; and
applying a pulse compression process to the first separated receive signal having undergone the interference elimination process;
wherein: the length of the first time interval T1 is so selected as to be different between two consecutive transmit/receive cycles and to be shorter than the dead time of the automatic transponder.

5. A radar signal processing method according to claim 4, wherein:
the separating step comprises separating the first separated receive signal and a second separated receive signal, the second separated receive signal having a frequency band corresponding to that of the non-modulated pulse or the trigger pulse; and
the method further comprising the step of combining the first separated receive signal having undergone the pulse compression process with the second separated receive signal.

## Patentansprüche

1. Radarvorrichtung (10), die ein Impulskompressionsverfahren verwendet, in dem ein Impulskompressionsvorgang auf ein Empfangssignal angewendet wird, um ein komprimiertes Impulssignal zu erhalten, wobei die Radarvorrichtung Folgendes umfasst:
eine Antenne (12), die ausgelegt ist, einen modulierten Impuls S2 zu übertragen und ein Echo von einer Echoquelle sowie ein automatisches Antwortsignal von einem automatischen Transponder zu empfangen, wenn der automatische Transponder ein Radarübertragungssignal empfängt, wobei der automatische Transponder eine Totzeit nach der Antwort aufweist;
wobei die Antenne ferner ausgelegt ist, beim Drehen einen Sende-/Empfangszyklus mit einem Zeitraum, der einem zweiten Zeitintervall T2 entspricht, zu wiederholen, wobei i) ein nicht modulierter Impuls S1 oder ein Auslöseimpuls übertragen wird, ii) wenigstens ein modulierter Impuls S2 ein erstes Zeitintervall T1 nach dem Übertragen des nicht modulierten Impulses S1 oder des Auslöseimpulses übertragen wird, und iii) ein Echo und/oder ein automatisches Antwortsignal auftritt, nachdem die Impulsübertragung empfangen worden ist;
einen Empfänger (36) zum Empfangen eines Empfangssignals für jeden Sende-/Empfangszyklus;
einen Signalseparator (40) zum Trennen eines ersten getrennten Empfangssignals mit einem Frequenzband, das dem des modulierten Impulses entspricht, von dem Empfangssignal für jeden Sende-/Empfangszyklus;
einen Entstörfilter (42) zum Anwenden eines Entstörvorgangs auf das erste getrennte Empfangssignal, wobei jeweilige erste getrennte Empfangssignale für zwei aufeinanderfolgende Sende-/Empfangszyklen verglichen werden und jede Signalkomponente mit einer Diskontinuität zwischen zwei aufeinanderfolgenden Sende-/Empfangszyklen von dem ersten getrennten Empfangssignal beseitigt wird;
einen Impulskompressor (44) zum Anwenden eines Impulskompressionsvorgangs auf das erste getrennte Empfangssignal, das dem Entstörvorgang unterzogen worden ist; und
wobei die Länge des ersten Zeitintervalls T1 so ausgewählt ist, dass sie zwischen zwei aufeinanderfolgenden Sende-/Empfangszyklen verschieden ist und kürzer ist als die Totzeit des automatischen Transponders.

2. Radarvorrichtung (10) nach Anspruch 1, wobei:
der Signaltrenner (40) ausgelegt ist, das erste getrennte Empfangssignal und ein zweites getrenntes Empfangssignal zu trennen, wobei das zweite getrennte Empfangssignal ein Frequenzband aufweist, das dem des nicht modulierten Impulses oder des Auslöseimpulses entspricht; und
die Radarvorrichtung ferner einen Signalkombinator (46) zum Kombinieren des ersten getrennten Empfangssignals, das dem Impulskompressionsvorgang unterzogen worden ist, mit dem zweiten getrennten Empfangssignal umfasst.

3. Radarvorrichtung (10) nach Anspruch 1, wobei:
die Antenne (12) ausgelegt ist, den Sende-/Empfangszyklus zu wiederholen, in dem ein kurzer Impuls mit einer Impulsweite, die kürzer ist als ein modulierter Impuls vor den Übertragungen des Auslöseimpulses und des modulierten Impulses übertragen wird;
der Signaltrenner (40) ausgelegt ist, das erste getrennte Empfangssignal und ein zweites getrenntes Empfangssignal zu trennen, wobei das zweite getrennte Empfangssignal ein Frequenzband aufweist, das dem des kurzen Impulses entspricht; und
die Radarvorrichtung ferner einen Signalkombinator (46) zum Kombinieren des ersten getrennten Empfangssignals, das dem Impulskompressionsvorgang unterzogen worden ist, mit dem zweiten getrennten Empfangssignal umfasst.

4. Radarsignalverarbeitungsverfahren, die folgenden Schritte umfassend:
Wiederholen eines Sende-/Empfangszyklus mit einem Zeitraum, der einem zweiten Zeitintervall T2 entspricht, wobei i) ein nicht modulierter Impuls S1 oder ein Auslöseimpuls übertragen wird, ii) wenigstens ein modulierter Impuls S2 ein erstes Zeitintervall T1 nach der Übertragung des nicht modulierten Impulses S1 oder des Auslöseimpulses übertragen wird, und iii) ein Echo und/oder ein automatisches Antwortsignal auftritt, nachdem die Impulsübertragung empfangen worden ist;
wobei das automatische Antwortsignal durch einen automatischen Transponder übertragen worden ist, nach dem Empfangen eines Radarübertragungssignals, wobei der automatische Transponder eine Totzeit nach dem Übertragen der Antwort aufweist;
Trennen eines ersten getrennten Empfangssignals mit einem Frequenzband, das dem des modulierten Impulses entspricht, von dem Empfangssignal für jeden Sende-/Empfangszyklus;
Anwenden eines Entstörvorgangs auf das erste getrennte Empfangssignal, wobei jeweilige erste getrennte Empfangssignale für zwei aufeinanderfolgende Sende-/Empfangszyklen verglichen werden und jede Signalkomponente mit einer Diskontinuität zwischen zwei aufeinanderfolgenden Sende-/Empfangszyklen von dem ersten getrennten Empfangssignal beseitigt wird; und
Anwenden eines Impulskompressionsvorgangs auf das erste getrennte Empfangssignal, das dem Entstörvorgang unterzogen worden ist;
wobei: die Länge des ersten Zeitintervalls T1 so ausgewählt ist, dass sie zwischen zwei aufeinanderfolgenden Sende-/Empfangszyklen verschieden ist und kürzer ist als die Totzeit des automatischen Transponders.

5. Radarsignalverarbeitungsverfahren nach Anspruch 4, wobei:
der Trennschritt das Trennen des ersten getrennten Empfangssignals und eines zweiten getrennten Empfangssignals umfasst, wobei das zweite getrennte Empfangssignal ein Frequenzband aufweist, das dem des nicht modulierten Impulses oder des Auslöseimpulses entspricht; und
wobei das Verfahren ferner den Schritt des Kombinierens des ersten getrennten Empfangssignals, das dem Impulskompressionsvorgang unterzogen worden ist, mit dem zweiten getrennten Empfangssignal umfasst.

## Revendications

1. Appareil radar (10) utilisant une technique de compression d'impulsions dans lequel un processus de compression d'impulsions est appliqué à un signal de réception pour obtenir un signal à impulsion compressée, l'appareil radar comprenant :
une antenne (12) adaptée pour transmettre une impulsion modulée S2 et pour recevoir un écho en provenance d'une source d'écho ainsi qu'un signal de réponse automatique en provenance d'un transpondeur automatique lorsque le transpondeur automatique reçoit un signal de transmission radar, le transpondeur automatique ayant un temps mort après ladite réponse ;
l'antenne, tout en tournant, étant en outre adaptée pour répéter avec une période égale à un second intervalle de temps T2 un cycle de transmission/réception, dans lequel i) une impulsion non modulée S1 ou une impulsion de déclenchement est transmise, ii) au moins une impulsion modulée S2 est transmise à un premier intervalle de temps T1 après la transmission de l'impulsion non modulée S1 ou de l'impulsion de déclenchement, et iii) un écho et/ou un signal de réponse automatique se produisant après la transmission d'impulsions sont reçus ;
un récepteur (36) pour recevoir un signal de réception pour chaque cycle de transmission/réception ;
un séparateur de signaux (40) pour séparer, du signal de réception pour chaque cycle de transmission/réception, un premier signal de réception séparé ayant une bande de fréquences correspondant à celle de l'impulsion modulée ;
un éliminateur de brouillage (42) pour appliquer un processus d'élimination de brouillage au premier signal de réception séparé, dans lequel des premiers signaux de réception séparés respectifs pour deux cycles de transmission/réception consécutifs sont comparés et toute composante de signal ayant une discontinuité entre deux cycles de transmission/réception consécutifs est éliminée du premier signal de réception séparé ;
un compresseur d'impulsions (44) pour appliquer un processus de compression d'impulsions au premier signal de réception séparé ayant subi le processus d'élimination de brouillage ; et
la longueur du premier intervalle de temps T1 étant choisie de façon à être différente entre deux cycles de transmission/réception consécutifs et à être plus courte que le temps mort du transpondeur automatique.

2. Appareil radar (10) selon la revendication 1, dans lequel :
le séparateur de signaux (40) est adapté pour séparer le premier signal de réception séparé et un second signal de réception séparé, le second signal de réception séparé ayant une bande de fréquences correspondant à celle de l'impulsion non modulée ou de l'impulsion de déclenchement ; et
l'appareil radar comprend en outre un combineur de signaux (46) pour combiner le premier signal de réception séparé ayant subi le processus de compression d'impulsions avec le second signal de réception séparé.

3. Appareil radar (10) selon la revendication 1, dans lequel :
l'antenne (12) est adaptée pour répéter le cycle de transmission/réception dans lequel une impulsion courte ayant une largeur d'impulsion plus courte qu'une impulsion modulée est transmise en avance des transmissions de l'impulsion de déclenchement et de l'impulsion modulée ;
le séparateur de signaux (40) est adapté pour séparer le premier signal de réception séparé et un second signal de réception séparé, le second signal de réception séparé ayant une bande de fréquences correspondant à celle de l'impulsion courte ; et
l'appareil radar comprend en outre un combineur de signaux (46) pour combiner le premier signal de réception séparé ayant subi le processus de compression d'impulsions avec le second signal de réception séparé.

4. Procédé de traitement de signal radar comprenant les étapes de :
répétition d'un cycle de transmission/réception avec une période égale à un second intervalle de temps T2, dans lequel i) une impulsion non modulée S1 ou une impulsion de déclenchement est transmise, ii) au moins une impulsion modulée S2 est transmise à un premier intervalle de temps T1 après la transmission de l'impulsion non modulée S1 ou de l'impulsion de déclenchement, et iii) un écho et/ou un signal de réponse automatique se produisant après la transmission d'impulsions sont reçus ; le signal de réponse automatique étant transmis par un transpondeur automatique suite à la réception d'un signal de transmission radar, le transpondeur automatique ayant un temps mort après la transmission de ladite réponse ;
séparation, du signal de réception pour chaque cycle de transmission/réception, d'un premier signal de réception séparé ayant une bande de fréquences correspondant à celle de l'impulsion modulée ;
application d'un processus d'élimination de brouillage au premier signal de réception séparé, dans lequel des premiers signaux de réception séparés respectifs pour deux cycles de transmission/réception consécutifs sont comparés et toute composante de signal ayant une discontinuité entre deux cycles de transmission/réception consécutifs est éliminée du premier signal de réception séparé ; et
application d'un processus de compression d'impulsions au premier signal de réception séparé ayant subi le processus d'élimination de brouillage ;
dans lequel : la longueur du premier intervalle de temps T1 est choisie de façon à être différente entre deux cycles de transmission/réception consécutifs et à être plus courte que le temps mort du transpondeur automatique.

5. Procédé de traitement de signal radar selon la revendication 4, dans lequel :
l'étape de séparation comprend la séparation du premier signal de réception séparé et d'un second signal de réception séparé, le second signal de réception séparé ayant une bande de fréquences correspondant à celle de l'impulsion non modulée ou de l'impulsion de déclenchement ; et
le procédé comprenant en outre l'étape de combinaison du premier signal de réception séparé ayant subi le processus de compression d'impulsions avec le second signal de réception séparé.
